# EUROPEAN PATENT SPECIFICATION

(11) **EP 0 610 163 B1**
(45) Date of publication and mention of the grant of the patent: **07.01.1999**
(21) Application number: 94830034.8
(22) Date of filing: 01.02.1994
(51) Int. Cl.: A01G 9/24

(54) **Radiant energy device for the microclimatic conditioning of isolated environments intended for aquiculture, hydroculture, and greenhouse culture**
Strahlungsenergievorrichtung für die mikroklimatische Regulierung von isolierten Umgebungen bestimmt für Aquikultur, Hydrokultur und Gewächshauskultur
Dispositif d'énergie radiante pour le conditionnement microclimatique d'environments isolés pour l'aquiculture, l'hydroculture et la culture de serre

(30) Priority: 02.02.1993 IT RM930054
(43) Date of publication of application: 10.08.1994
(73) Proprietor: Romeo, Giulio, I-00185 Rome (IT)
(72) Inventor: Romeo, Giulio, I-00185 Rome (IT)
(74) Representative: Massari, Marcello

(56) References cited:
- DE-A- 3 114 952
- DE-A- 3 919 507
- DE-U- 8 620 528
- FR-A- 2 353 026
- FR-A- 2 381 980
- GB-A- 2 215 357

## Description

The invention concerns a system activated by radiant energy for thermal and microclimatic conditioning of small greenhouses, seed beds, and tanks for hydroponics and aquiculture.

The invention, which integrates the structure of the culture tank with collectors, storage tanks and controlling elements, makes the use of solar energy convenient also in small systems.

In the field of ornamental aquiculture, the invention brings a remarkable innovation, making it possible the growth and breeding of freshwater tropical flora and fauna in a garden or on a terrace.

For thermal conditioning of little garden or balcony greenhouses, it is usually employed an electric heating with convectors, finned surfaces or heating cables.

There's another conditioning system which makes use of stoves, but the problems concerning their installation and maintenance make them inconvenient for small systems.

For the forcing of seed bed cultures, beside the common method of the manure bed, it is possible to employ also heating cables.

The employment of solar energy is limited to bigger systems, since for a little balcony greenhouse or seed bed it is not convenient to install solar collectors, storage tanks, and plumbing and controlling elements.

In the field of ornamental naturalistic aquiculture, the invention is an innovation compared to what industry has been offering up to now: interiors aquariums or garden ponds.

For aquatic flora and fauna, ponds and garden pools are a more natural environment than the aquarium, because they have better chances of autoregulation; this is due to the action of sunlight and to the contribution of allochthon substances from the environment. People fond of aquariums, who breed tropical fishes in outdoor ponds during the summer, find it advantageous for the size, color, and liveliness of the animals.

The garden pools and ponds available on the market today, employ either PVC or similar materials liners, or fiberglass or plastic materials tanks to be interred or simply laid on the ground. Because of the great faying surface with both the ground and the atmosphere, with this kind of ponds the heat stored during the exposure to the sunlight is soon released, and they assume quickly the environment temperature. The growth and breeding of freshwater tropical flora and fauna, requiring a minimum temperature of 22-23 C, is therefore limited to few months in a year.

In this field DE-A-3114952 (D1) discloses a device for microclimatic conditioning comprising a tank without any bottom wall which excludes the possibility to use the same also as an aquarium. Furthermore in the device known from D1, the solar collector is located inside the culture tank while in the instant invention this solar collector is located externally to the culture tank so that the heat exchange is performed by means of the contact of the heat storage container with the tank.

The invention, employing only radiant energy, makes it possible to breed and grow tropical fishes and plants outdoor all over the year.

The invention will now be described in detail with reference to the accompanying figures, which represent only some ways of carrying out the invention.
Figure 1 shows in axonometric exploded view an aquarium formed in accordance with the invention, in which the collector liquid circulates by natural convection:
figure 2 shows in axonometric perspective a natural convection seed bed formed in accordance with the invention;
figure 3 is a cross section of the seed bed as shown in figure 2;
figure 4 is a cross section illustrating the same example of the invention applied to a little terrace greenhouse;
figure 5 is a cross section of the form of the invention with natural convection of the collector fluid and integrative storing by means of eutectic salts;
figure 6 shows in axonometric perspective an aquarium formed in accordance with the invention, with forced circulation of the collector fluid;
figure 7 shows an operation scheme of the example as shown in figure 6;
figure 8 shows in perspective a little forced circulation greenhouse formed in accordance with the invention;
figure 9 is a cross section of the example as shown in figure 8;
figure 10 illustrates a simple storage form of the invention;
figure 11 is a cross section of the example as shown in figure 10;
figure 12 shows in cross section a modification of the form of the invention as shown in figure 8;
figure 13 shows in cross section a modification of the form of the invention as shown in figure 2.

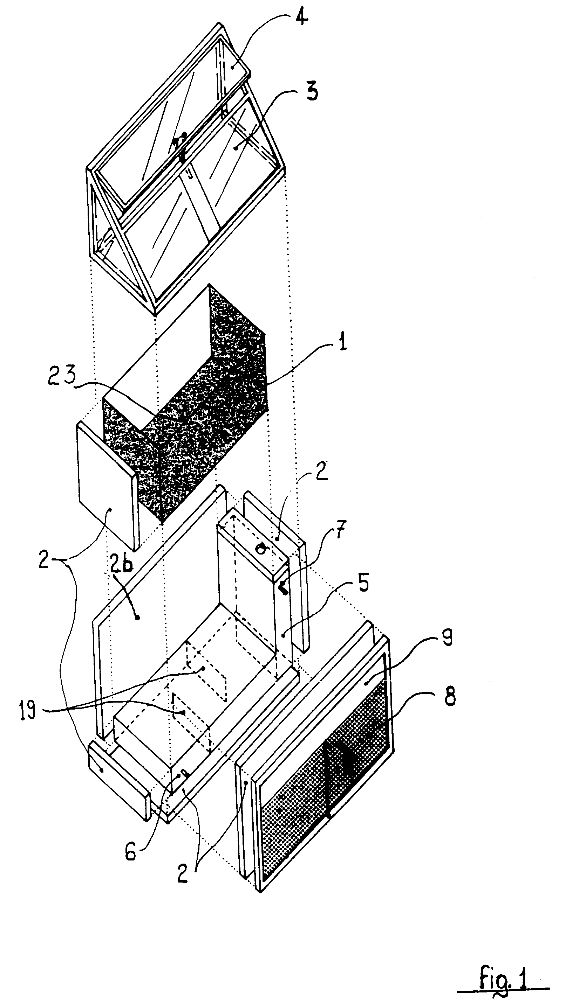

In figure 1, reference 1 indicates the culture tank, insulated through insulating transparent boards 2, 2b, 3 refers to a movable transparent cover.

Reference 4 indicates an aeration hole, while 5 refers to a particular L-shaped hot water storage tank, provided with deviation surfaces to make the path of the fluid longer; 6 refers to the collector fluid inlet, and 7 to the collector fluid outlet, provided with a backflow preventer valve; 8 refers to a solar collector and 9 to a curtain for the regulation of the device.

Concerning the thermoregulation, the device backflow preventing valve; 8 refers to a solar collector and 9 to a curtain for the regulation of the device.

Concerning the thermoregulation, the device works according to the law of natural convection, and circulation between the thermal storage and the collector takes place when the latter is exposed to a flux of radiant energy. In order to obtain the maximum efficiency, the system has to be placed outdoor, in a place with no shadows, and with the collector panel and the sloped cover looking South. During the day, the water is heated both from above, by direct radiation and convective exchanges with the atmosphere inside the cover, and from below, by conduction between the bottom of the culture tank and the collector fluid, which is heated by the solar collector incorporated in the L-shaped storage tank below. Both the first and the second of these mechanisms can be regulated with the shadowing and the aeration holes.

During the night, while the insulation of the system allows to maintain most of the heat stored during the day, the L-shaped storage tank keeps on releasing heat to the pond, granting the breeding conditions ( a difference of few degrees between the maximum temperature, reached in the late afternoon, and the minimum temperature, reached in the first hours in the morning, can be considered advantageous to the biologicum equilibrium).

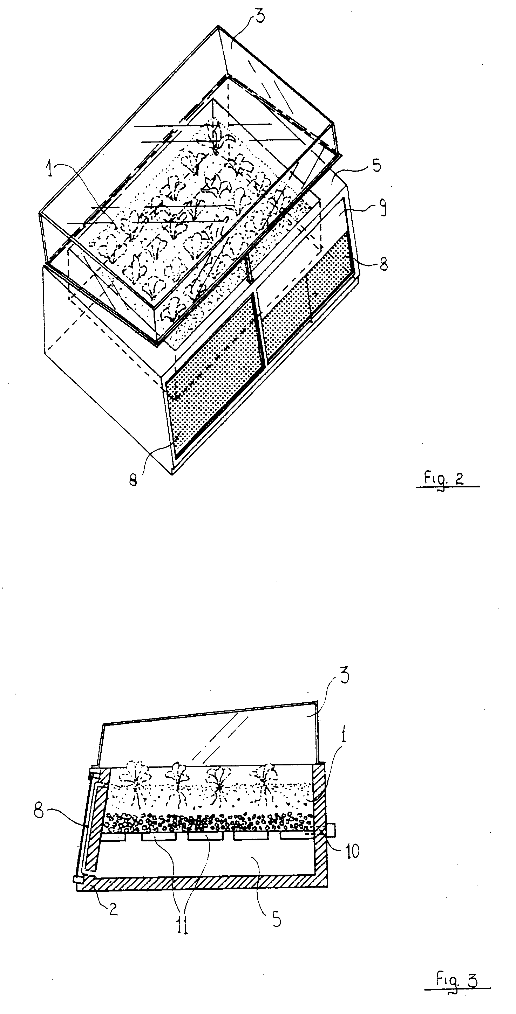

Figure 2 shows a seed bed to which two solar collectors 8 and two storage tanks 5 have been applied.

In figure 3, reference 10 indicates a drainage hole, while 11 refers to some air spaces.

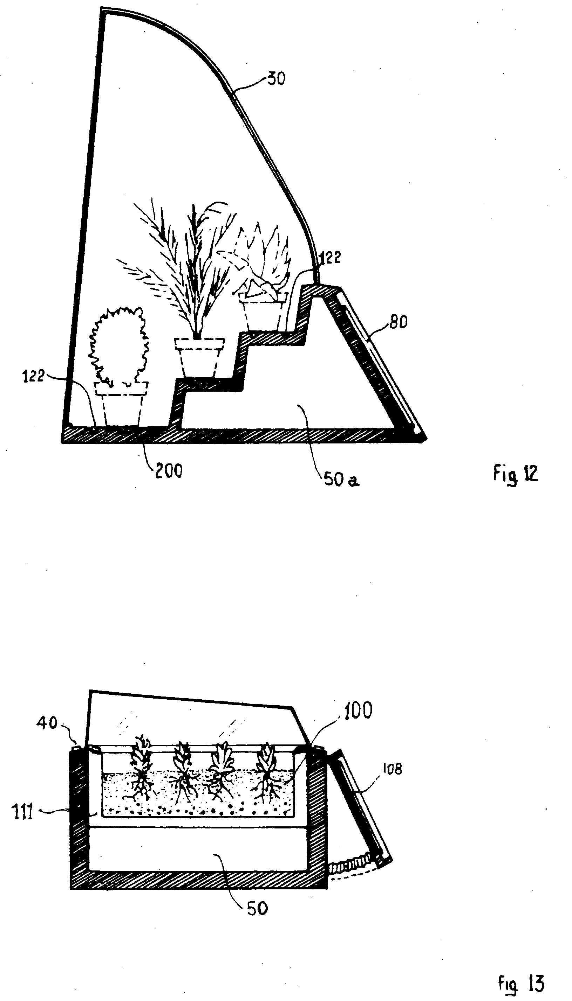

In figure 4, 12 refers to a regulable curtain for the shadowing of the culture tank.

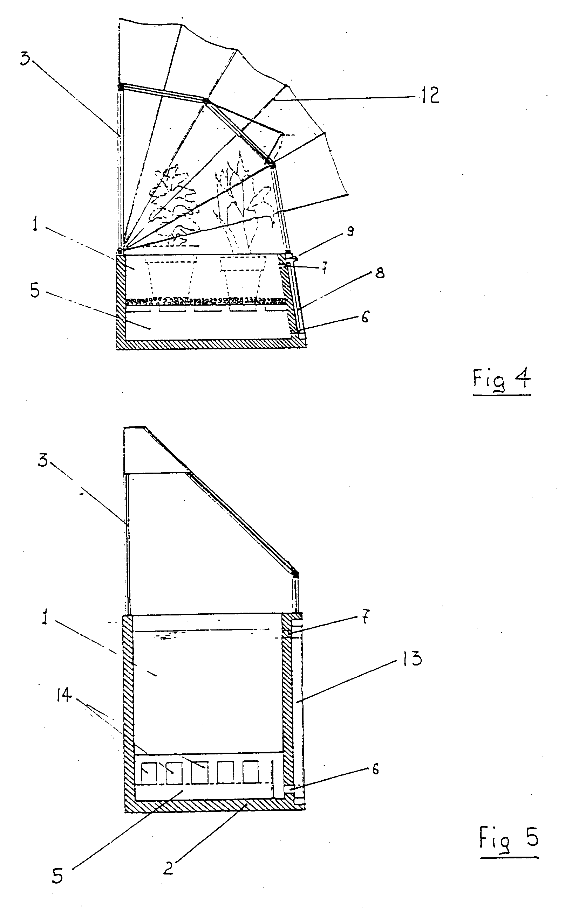

In figure 5 is represented an embodiment of the invention in which air is the collector fluid; reference 13 indicates an air solar collector, with fusible salts boxes inside the storage tank 5.

In this embodiment the thermoregulation is also obtained by natural convection. During the day, the hot air flow established between the solar collector and the storage tank, while heating the system from below, causes the salts inside the L-shaped storage tank to fuse and to absorb the heat. If, during the night, the temperature drops until the point of crystallization is reached, the heat stored is released again. The fact that the inlet is located at the bottom of the storage tank, and the canalization the latter is provided with, prevent the heat from being dispersed towards the outside, at the same time allowing the heat transfer to the upper tank by conduction.

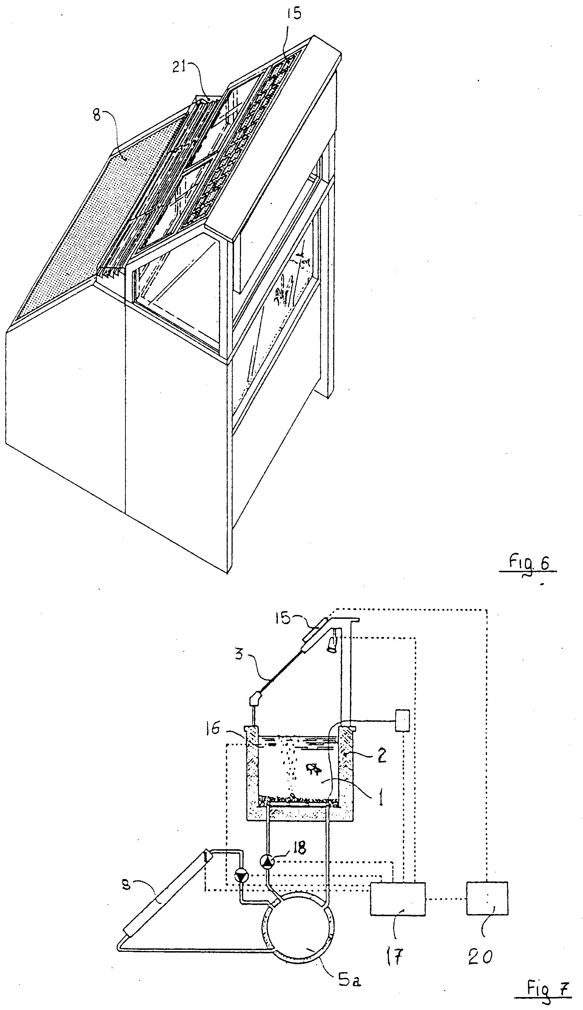

Figure 6 shows, in accordance with the invention, an aquarium with forced circulation of the collector liquid and a tilted-tray solar still 21.

The aquarium, which has to be placed in a garden or terrace, allows an automatic regulation of the temperature by means of a thermostat; a photovoltaic collector 15, which charges an accumulator 20, provides the energy required for the regulation and circulation equipments to work.

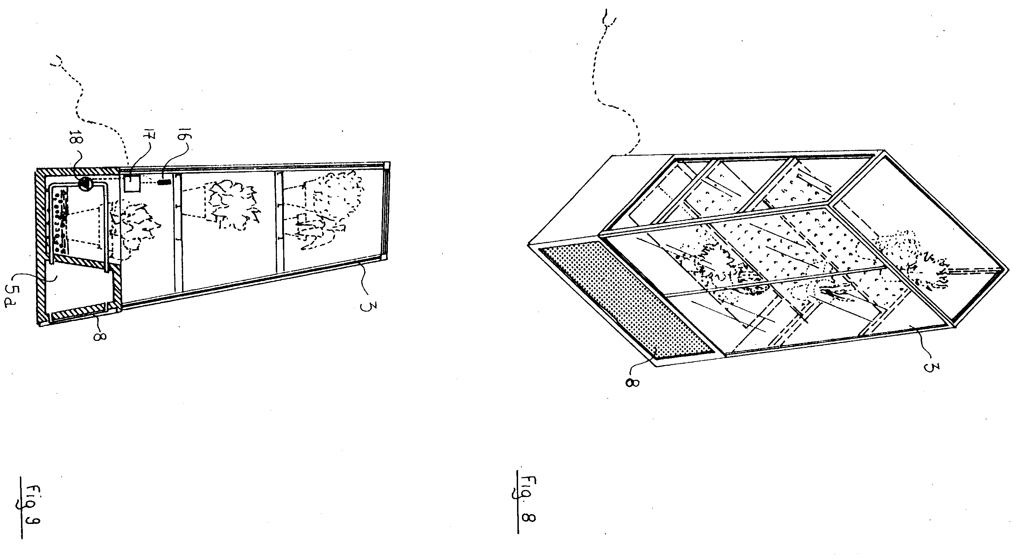

In figure 7, 16 refers to the control system (provided with a fixed point thermostat or a differential thermostat) which, by means of the circulation pump 18, activates the circulation between the fluid contained in the storage tank 5a and the heat exchanger 22 located on the bottom of the culture tank 1.

Figures 8 and 9 show the same embodiment of the invention as figures 6 and 7 applied to a little greenhouse. In this case, the circulation pump 18 is fed by an electric network.

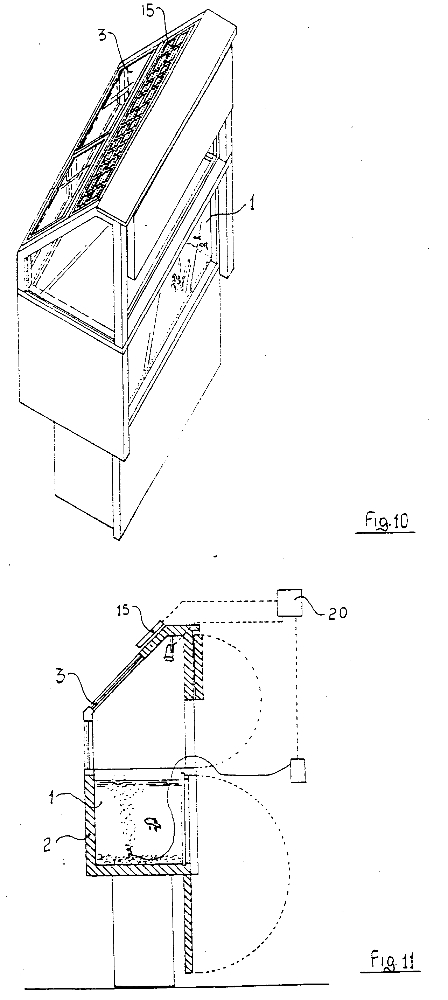

Figures 10 and 11 show a simple storage embodiment of the invention, in which the insulation and the transparent cover allow the optimization of thermal inertia of the culture water.

Specifically intended for aquiculture, the system can be employed for seasonal breeding of tropical fishes, for breeding of live food for aquariums animals (daphnia, cyclpos, etc.), for the wintering of nymphea and other aquatic plants which are sensitive to cold, and which in summer are kept in pools and garden ponds.

Figure 11 is a schematic section of the device in which 15 is a sloped photovoltaic panel located on top of the transparent cover 3; the electricity required for the breeding accessories (aerators, pumps, ornamental lights, etc.) is transferred into an accumulator.

In figure 12, in which to make things clearer the whole regulation system has been omitted, 50a refers to the thermal storage, whose particular shape allows a better employment of the room for the cultures; 80 refers to a solar collector, 122 to the heat exchange pipes, 30 to the transparent cover, and 200 refers to the insulation.

And finally, figure 13, shows a seed bed formed in accordance with the invention, in which the solar collector 108 is provided with hinges so that its slope can be varied. 100 refers to an extractable culture tank, separated from the L-shaped storage tank 50 by an air space 111; 40 refers to the aeration holes of the said air space, which allow to convey the air flux, hot because of the contact with the L-shaped storage tank, toward the inside or the outside of the device.

## Claims

1. A device for microclimatic conditioning comprising a culture tank (1), a heat storaging fluid mass, a container (5) for said heat storaging fluid mass located externally to said tank (1), a solar collector (8, 13, 80, 108) interconnected with said external container (5) through way-out and way-in passages (6,7) for said heat storaging fluid mass and a movable transparent cover (3) for said tank (1), provided with a movable shadowing screen, characterised in that said tank (1) has a bottom wall (23) and said external container (5) for the heat storaging fluid mass has at least one wall in contact with said bottom wall (23) and that said solar collector (8, 13, 80, 108) is external to said tank (1) so that the heat exchange is performed by means of said contact of the heat storage container (5) with said tank (1).

2. The device for microclimatic conditioning of Claim 1, characterised in that said solar collector (8) has at least one side in contact with said tank (1).

3. The device for microclimatic conditioning of Claim 2, characterised in that said heat storage fluid container (5) has an L-shaped cross section, having at least two sides in contact with said tank (1) and contains internal deviating surfaces to make the path of the storage fluid longer between the way in and way out passages (6,7).

4. The device for microclimatic conditioning of Claim 3, characterised in that said solar collector (8) is provided with a shadowing screen (9) for the regulation of heat storage fluid temperature.

5. The device for microclimatic conditioning of Claim 1, characterised in that said way out passage (7) of the heat storage fluid is provided with a backflow preventing valve.

6. The device for microclimatic conditioning of Claim 1, provided with a transparent cover (3) and characterised in that the sides of said tank (1) are insulated.

7. The device for microclimatic conditioning of Claim 1, wherein some of said insulated sides (2) are provided with an infrared radiations reflecting inner surface.

8. The device for microclimatic conditioning of Claim 5, wherein said fluid is a liquid.

9. The device for microclimatic conditioning of Claim 5, wherein said fluid is a gas.

10. The device for microclimatic conditioning of Claim 1, wherein the circulation of the heat storage fluid is forced.

11. The device for microclimatic conditioning of Claim 10, wherein the forced circulation of the heat storage fluid is obtained by means of an electric pump (18).

12. The device for microclimatic conditioning of Claim 11, wherein said pump (18) is fed by the current produced by a photovoltaic panel (15).

13. The device for microclimatic conditioning of Claim 1, wherein said external container (5) contains fusible salts of the eutectic series which store thermal energy when exposed to infrared radiation and release it through a state-change from solid to liquid state.

14. The device for microclimatic conditioning of Claim 1, comprising a tilted-tray solar still (21) for the optimization of the chemical and physical peculiarities of the culture water.

15. The device for microclimatic conditioning of Claim 12, comprising a photovoltaic panel (15) which provides with electricity the accessories required for the growth of the organisms contained in said tank (1).

16. The device for microclimatic conditioning of Claim 6, wherein some sides of said tank (1) are transparent in order to allow a view from the outside.

17. The device for microclimatic conditioning of Claim 16, wherein said transparent sides are composed of two surfaces forming a dry air space.

18. The device for microclimatic conditioning of Claim 16, wherein said transparent sides are protected by insulated doors against thermal dispersion.

19. The device for microclimatic conditioning of Claim 16, wherein said transparent sides are protected by transparent material doors (2B).

20. The device for microclimatic conditioning of Claim 1, wherein siad heat storage fluid container (5) has a stepped cross section.

21. The device for microclimatic conditioning of Claim 1, wherein said solar collector (8) is provided with hinges, so that its slope can be varied.

## Patentansprüche

1. Mikroklima-Anlage bestehend aus einem Kultivierungstank (1), einem wärmespeichernden Fluid, einem außerhalb dieses Tanks (1) angeordneten Behälter (5) für das wärmespeichernde Fluid, einem Sonnenkollektor (8,13,80,108), welcher mit dem Außenbehälter (5) über Einlaß- und Auslaßkanäle (6,7) für das wärmespeichernde Fluid verbunden ist, und einer beweglichen, transparenten Abdeckung (3) für den Tank (1), welcher mit einem beweglichen Schattierungsschirm versehen ist,
dadurch gekennzeichnet, daß der Tank (1) eine Bodenwand (23) und der Außenbehälter (5) für das wärmespeichernde Fluid zumindest eine mit der Bodenwand (23) in Kontakt befindliche Wand aufweist, und daß der Sonnenkollektor (8,13,80,108) sich außerhalb des Tanks (1) befindet, so daß der Wärmeaustausch über diesen Kontakt des Wärmespeicherbehälters (5) mit dem Tank (1) erfolgt.

2. Mikroklima-Anlage nach Anspruch 1, dadurch gekennzeichnet daß der Sonnenkollektor (8) sich zumindest mit einer Seite mit dem Tank (1) in Kontakt befindet.

3. Mikroklima-Anlage nach Anspruch 2, dadurch gekennzeichnet, daß der Behälter für das wärmerspeichernde Fluid L-förmigen Querschnitt aufweist, sich zumindest mit zwei Seiten mit dem Tank (1) in Kontakt befindet und innere Ableitflächen besitzt, um die Bahn des Speicherfluids zwischen den Ein- und Auslaßkanälen (6,7) zu verlängern.

4. Mikroklima-Anlage nach Anspruch 3, dadurch gekennzeichnet, daß der Sonnenkollektor (8) mit einem Schattierungsschirm (9) zur Regulierung der Temperatur des Wärmespeicherfluids versehen ist.

5. Mikroklima-Anlage nach Anspruch 1, dadurch gekennzeichnet, daß der Auslaßkanal (7) des Wärmespeicherfluids mit einem den Rückfluß verhindernden Ventil versehen ist.

6. Mikroklima-Anlage nach Anspruch 1 mit einer transparenten Abdeckung (3), dadurch gekennzeichnet, daß die Seiten des Tanks (1) isoliert sind.

7. Mikroklima-Anlage nach Anspruch 1, dadurch gekennzeichnet, daß die isolierten Seiten (2) Innenflächen aufweisen, welche Infrarotstrahlung reflektieren

8. Mikroklima-Anlage nach Anspruch 5, dadurch gekennzeichnet, daß das Fluid eine Flüssigkeit ist.

9. Mikroklima-Anlage nach Anspruch 5, dadurch gekennzeichnet, daß das Fluid ein Gas ist.

10. Mikroklima-Anlage nach Anspruch 1, dadurch gekennzeichnet, daß der Umlauf des Wärmespeicherfluids unter Aufwendung von Kraft erfolgt.

11. Mikroklima-Anlage nach Anspruch 10, dadurch gekennzeichnet, daß der unter Kraftaufwand erfolgende Umlauf des Wärmespeicherfluids mit Hilfe einer elektrischen Pumpe (18) erfolgt.

12. Mikroklima-Anlage nach Anspruch 11, dadurch gekennzeichnet, daß die Pumpe (18) mit durch eine Fotozelle (15) erzeugten Strom gespeist wird.

13. Mikroklima-Anlage nach Anspruch 1, dadurch gekennzeichnet, daß der Außenbehälter (5) Schmelzsalze der eutektischen Reihe enthält, welche Wärmeenergie speichern, wenn sie Infrarotstrahlung ausgesetzt werden und diese durch eine Zustandsänderung vom festen in den flüssigen Zustand freigeben.

14. Mikroklima-Anlage nach Anspruch 1, gekennzeichnet durch eine solare Destillieranlage mit abgeschrägter Wanne (21) zur Optimierung der chemischen und physikalischen Eigenschaften des Kultivierungswassers.

15. Mikroklima-Anlage nach Anspruch 12, gekennzeichnet durch eine Fotozelle (15), welche die Zubehörteile mit elektrischem Strom versorgt, welche für das Wachstum der im Tank (1) enthaltenen Organismen erforderlich sind.

16. Mikroklima-Anlage nach Anspruch 6, dadurch gekennzeichnet, daß einige Seiten des Tanks (1) transparent sind, um Einsicht von außen zu gewähren.

17. Mikroklima-Anlage nach Anspruch 16, dadurch gekennzeichnet, daß die transparenten Seiten aus zwei, einen trockenen Raum bildenden Flächen bestehen.

18. Mikroklima-Anlage nach Anspruch 16, dadurch gekennzeichnet, daß die transparenten Seiten durch isolierte Türen gegen Wärmeableitung geschützt sind.

19. Mikroklima-Anlage nach Anspruch 16, dadurch gekennzeichnet, daß die transparenten Seiten durch Türen (28) aus transparentem Material geschützt sind.

20. Mikroklima-Anlage nach Anspruch 1, dadurch gekennzeichnet, daß der das wärmespeichernde Fluid enthaltende Behälter (5) einen gestuften Querschnitt aufweist.

21. Mikroklima-Anlage nach Anspruch 1, dadurch gekennzeichnet, daß der Sonnenkollektor (8) mit Gelenken versehen ist, so daß seine Neigung veränderbar ist.

## Revendications

1. Dispositif pour le conditionnement microclimatique, comprenant une bâche de culture, une masse d'un fluide d'accumulation de chaleur, un reservoir pour ladite masse d'accumulation de chaleur situé extérieurement à cette bâche (1), un collecteur solaire (8,13,80,108) interconnecté avec ledit reservoir extérieur (5) par des passages d'aller et retour (6,7) pour ledit fluide d'accumulation de chaleur et un couvercle mobile transparent (3) pour cette bâche (1), pourvu d'un écran parasol mobile, caracterisé en ce que ladite bâche (1) a une paroi de fond (23) et ledit reservoir extérieur (5) pour la masse du fluide d'accumulation de chaleur a aumoins une parois en contact avec ladite paroi de fond (23) et que ledit collecteur solaire (8,13,80,108) est à l'estérieur de ladite bâche (1) de sort que l'échange de chaleur est effectué par le moyen dudit contact entre ledit reservoir d'accumulation de chaleur (5) et ladite bâche (1).

2. Dispositif pour le conditionnement microclimatique selon la revendication 1, caracterisé en ce que ledit collecteur solaire (8) a au moins un côté en contact avec ladite bâche (1).

3. Dispositif pour le conditionnement microclimatique selon la revendication 2, caracterisé en ce que ledit reservoir (5) pour le fluide d'accumulation de chaleur a une section transversale en forme de L, ayant au moins deux côtés en contact avec ladite bâche (1) et possède, a l'intérieur, des cloisons de déviation pour allonger le parcours du fluide d'accumulation entre les passages d'aller et retour (6,7).

4. Dispositif pour le conditionnement microclimatique selon la revendication 3, caracterisé en ce que ledit collecteur solaire (8) est pourvu d'un écran parasol (9) pour la régulation de la température du fluide d'accumulation de chaleur.

5. Dispositif pour le conditionnement microclimatique selon la revendication 1, caracterisé en ce que ledit passage de sortie (7) du fluide d'accumulation de chaleur est pourvu d'une valve de non-retour.

6. Dispositif pour le conditionnement microclimatique selon la revendication 1, pourvu d'un couvercle transparent (3) et caracterisé en ce que les côtés de ladite bâche (1) sont calorifugés.

7. Dispositif pour le conditionnement microclimatique selon la revendication 1, dans lequel certaines de ces côtés calorifugés (2) ont une surface interne que réfléchit les radiations infrarouges.

8. Dispositif pour le conditionnement microclimatique selon la revendication 5, dans lequel ledit fluide est un liquide.

9. Dispositif pour le conditionnement microclimatique selon la revendication 5, dans lequel ledit fluide est un gaz.

10. Dispositif pour le conditionnement microclimatique selon la revendication 1, dans lequel la circulation du fluide d'accumulation de chaleur est forcée.

11. Dispositif pour le conditionnement microclimatique selon la revendication 10, dans lequel la circulation forcée du fluide d'accumulation de chaleur est assurée par une pompe électrique (18).

12. Dispositif pour le conditionnement microclimatique selon la revendication 11, dans lequel ladite pompe (18) est alimentée par le courant géneré par un panneau photovoltaique (15).

13. Dispositif pour le conditionnement microclimatique selon la revendication 1, dans lequel ledit reservoir extérieur (5) contient des sels fusibles, de la série eutectique, qui emmagasinent l'énergie thermique, quand exposés à un flux de chaleur, et la restituent, à travers un changement d'état, de l'état solide à l'état liquide.

14. Dispositif pour le conditionnement microclimatique selon la revendication 1, comprenant un distillateur solaire à plateau incliné (21) pour l'optimalisation des caractéristiques chimico-physiques de l'eau de culture.

15. Dispositif pour le conditionnement microclimatique selon la revendication 12, comprenant un panneau photovoltaique (15) qui fournit le courant électrique aux accessoires nécessaires pour la culture des organismes contenus dans ladite bâche (1).

16. Dispositif pour le conditionnement microclimatique selon la revendication 6, dans lequel certaines parois de ladite bâche (1) sont transparentes pour permettre la vision de l'extérieur.

17. Dispositif pour le conditionnement microclimatique selon la revendication 16, dans lequel ledites parois transparentes sont constituées par deux superficies qui forment une chambre à air sec.

18. Dispositif pour le conditionnement microclimatique selon la revendication 16, dans lequel ledites parois transparentes sont protégées contre la dispersion thermique grâce à des volets calorifugés.

19. Dispositif pour le conditionnement microclimatique selon la revendication 16, dans lequel ledits côtés transparents sont protégés par des volets calorifugés trasparents (2B).

20. Dispositif pour le conditionnement microclimatique selon la revendication 1, dans lequel ledit reservoir pour le fluide d'accumulation de chaleur (5) a une section transversale à degrés.

21. Dispositif pour le conditionnement microclimatique selon la revendication 1, dans lequel ledit collecteur solaire (8) est pourvu de charnières de manière que son inclinaison peut être changée.
